# EUROPEAN PATENT APPLICATION

(11) **EP 4 625 138 A1**
(43) Date of publication of application: **01.10.2025**
(21) Application number: 23909082.2
(22) Date of filing: 30.06.2023
(51) Int. Cl.: G06F 3/14

(54) **SCREEN MIRRORING METHOD, ELECTRONIC DEVICE, AND COMPUTER-READABLE MEDIUM**

(30) Priority: 30.12.2022 CN 202211731886
(71) Applicant: ZTE CORPORATION, Shenzhen, Guangdong 518057 (CN)
(72) Inventor: FANG, Shu, Shenzhen, Guangdong 518057 (CN)
(74) Representative: Canzler & Bergmeier Patentanwälte Partnerschaft mbB
(86) International application number: PCT/CN2023/104832
(87) International publication number: WO 2024/139138

(57) **Abstract**

Provided in the present disclosure is a screen mirroring method, which is applied to a first device. The method comprises: receiving first layout information of a display interface in a second device; and according to the first layout information and screen parameters of a screen mirroring window in a first device, loading a screen mirroring interface corresponding to the display interface in the screen mirroring window. Further provided in the present disclosure are a screen mirroring method applied to a second device, an electronic device, and a computer-readable medium.

## Description

### CROSS-REFERENCE TO RELATED APPLICATIONS

The present disclosure claims priority from Chinese patent application No. CN202211731886.8 titled "SCREEN MIRRORING METHOD, ELECTRONIC DEVICE, AND COMPUTER-READABLE MEDIUM" filed on December 30, 2022, the entire contents of which are incorporated herein by reference.

### TECHNICAL FIELD

The present disclosure relates to the technical field of terminals, and in particular relates to a screen mirroring method, an electronic device, and a computer-readable medium.

### BACKGROUND

With the development of technology, electronic devices such as mobile phones, tablets and televisions have more and more powerful performance, and more and more abundant use scenarios, and the demand for cross-screen use among a plurality of electronic devices by users is gradually increased. Screen mirroring and multi-screen collaboration are common modes of cross-screen use of electronic devices, which can enable not only expansion from a small screen to a large screen, but also linkage of different electronic devices, so that the electronic devices such as mobile phones, computers, tablets and televisions are gradually integrated to facilitate continuous processing of tasks on different electronic devices by a user.

In screen mirroring, the response speed and display quality of the screen mirroring are key factors influencing an intuitive feeling of the user. However, the existing art has the technical problems of screen mirroring jamming, extended delay, high power consumption, picture distortion and disproportion in screen mirroring, and the like.

### SUMMARY

Embodiments of the present disclosure provide a screen mirroring method, an electronic device, and a computer-readable medium.

In a first aspect, an embodiment of the present disclosure provides a screen mirroring method applied to a first device, including: receiving first layout information of a display interface in a second device; and loading, based on the first layout information and a screen parameter of a screen mirroring window in the first device, a screen mirroring interface corresponding to the display interface in the screen mirroring window.

In a second aspect, an embodiment of the present disclosure provides a screen mirroring method applied to a second device, including: acquiring first layout information of a display interface; and transmitting the first layout information to a first device to mirror the display interface into the first device.

In a third aspect, an embodiment of the present disclosure provides an electronic device, including: one or more processors; and a memory having one or more programs stored thereon which, when executed by the one or more processors, cause the one or more processors to implement the screen mirroring method of the first aspect and/or the screen mirroring method of the second aspect of the embodiments of the present disclosure.

In a fourth aspect, an embodiment of the present disclosure provides a computer-readable medium storing a computer program thereon which, when executed by a processor, causes the screen mirroring method of the first aspect and/or the screen mirroring method of the second aspect of the embodiments of the present disclosure to be implemented.

### BRIEF DESCRIPTION OF DRAWINGS

FIG. 1 is a flowchart of a screen mirroring method according to an embodiment of the present disclosure;
FIG. 2 is a flowchart of some operations in another screen mirroring method according to an embodiment of the present disclosure;
FIG. 3 is a flowchart of a screen mirroring method according to an embodiment of the present disclosure;
FIG. 4 is a schematic block diagram of an electronic device according to an embodiment of the present disclosure;
FIG. 5 is a schematic block diagram of a computer-readable medium according to an embodiment of the present disclosure; and
FIG. 6 is a schematic diagram of a type of layout information according to an embodiment of the present disclosure.

### DETAIL DESCRIPTION OF EMBODIMENTS

To improve understanding of the technical solutions of the present disclosure for those skilled in the art, the screen mirroring method, the electronic device and the computer-readable medium of the present disclosure will be described below in detail below in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

With the development of technology, electronic devices such as mobile phones, tablets and televisions have more and more powerful performance, and more and more abundant use scenarios, and the demand for cross-screen use among a plurality of electronic devices by users is gradually increased. Screen mirroring and multi-screen collaboration are common modes of cross-screen use of electronic devices, which can enable not only expansion from a small screen to a large screen, but also linkage of different electronic devices, so that the electronic devices such as mobile phones, computers, tablets and televisions are gradually integrated to facilitate continuous processing of tasks on different electronic devices by a user.

In screen mirroring, the response speed of the screen mirroring and the display quality of the screen mirroring are key factors influencing an intuitive feeling of the user. In some existing art, each frame of picture on a display interface at a source end is acquired and transmitted to a sink end in real time in a frame animation form, which involves a large data volume to be transmitted and high requirements on the performance of the electronic device and the network, and tends to cause the problems of screen mirroring jamming, extended delay, high power consumption, picture distortion and disproportion in screen mirroring, and the like, resulting in poor use experience of users.

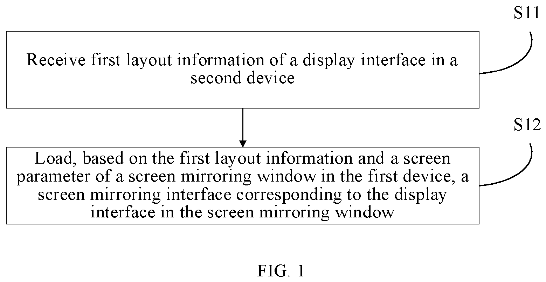

In a first aspect, referring to FIG. 1, an embodiment of the present disclosure provides a screen mirroring method applied to a first device, which includes the following operations S11 and S12.

At S11, receiving first layout information of a display interface in a second device. At S12, loading, based on the first layout information and a screen parameter of a screen mirroring window in the first device, a screen mirroring interface corresponding to the display interface in the screen mirroring window.

In an embodiment of the present disclosure, the first device is a target device for screen mirroring, and the second device is a source device for screen mirroring, which means that in screen mirroring, a display interface in the second device is mirrored to the first device for display. In an embodiment of the present disclosure, each of the first device and the second device may be any one of a mobile phone, a tablet, a computer, a television, a projector, or the like. This is not particularly limited in the embodiments of the present disclosure. In some embodiments, the first device refers to an electronic device of a sink end, and the second device refers to an electronic device of a source end. Any electronic device may serve as the electronic device of the sink end or the electronic device of the source end, or both the electronic device of the sink end and the electronic device of the source end.

In an embodiment of the present disclosure, the display interface is an interface of the second device to be mirrored to the first device, and the screen mirroring interface is an interface displayed when the display interface is mirrored from the second device to the first device.

In some embodiments, the layout information is information representing layout, such as attributes, arrangement, and the like, of controls in the interface. Taking an Android system as an example, the layout information includes information such as Android: layout_width, Android: layout_height, and Android: orientation of a control. For example, Android: layout_width = match_parent indicates that the control fills the whole screen in a horizontal direction, and based on such information, the control can be made to fill the whole window in the horizontal direction in windows of different sizes and different electronic devices. In some embodiments, the layout information is in the form of a view tree containing information such as drawable, text, layout_width and the like from DecorView to each control.

In an embodiment of the present disclosure, when the display interface is mirrored from the second device to the first device, only the first layout information of the display interface is delivered to the first device without transmitting each frame of picture of the display interface to the first device in a frame animation form. Based on the first layout information and a screen parameter of the screen mirroring window in the first device, the first device can generate a screen mirroring interface adapted to the screen mirroring window in the first device. It should be noted that the screen mirroring interface adapted to the screen mirroring window includes a size of the screen mirroring interface adapted to a size of the screen mirroring window, and a resolution of the screen mirroring interface adapted to a resolution of the screen mirroring window, thereby achieving a screen mirroring interface without disproportion and picture distortion.

According to the screen mirroring method provided in the embodiment of the present disclosure, when the display interface is mirrored from the second device to the first device, only layout information of the display interface is delivered to the first device, and based on the first layout information and a screen parameter of the screen mirroring window in the first device, the first device can generate a screen mirroring interface adapted to the screen mirroring window in the first device. Therefore, a smaller data volume needs to be transmitted in the screen mirroring process, and the screen mirroring smoothness is improved, while the sharpness of the screen mirroring interface generated in the first device is also guaranteed, thereby avoiding disproportion and picture distortion and improving the use experience of a user.

How to generate the screen mirroring interface from the first layout information and the screen parameter of the screen mirroring window in the first device is not particularly limited in the embodiments of the present disclosure.

In some embodiments, loading, based on the first layout information and a screen parameter of the screen mirroring window in the first device, the screen mirroring interface corresponding to the display interface in the screen mirroring window includes: generating second layout information of the screen mirroring interface based on the first layout information and the screen parameter; and loading the second layout information in the screen mirroring window to display the screen mirroring interface.

Taking an Android system as an example, the layout information is in the form of a view tree. The second device acquires structural information (first layout information) of the view tree of the display interface, and encodes and transmits the structural information to the first device. The encoded information includes a layout ID, layout_width, and other information of an outermost layer of the display interface, and a constraint relationship between attributes of inner layer controls and controls, and the like. The first device decodes and obtains the structural information of the view tree of the display interface, generates a new layout file (second layout information) to adapt to a screen parameter of the screen mirroring window in the first device, and loads the layout file into the screen mirroring window so that the screen mirroring interface can be displayed.

How to generate the second layout information of the screen mirroring interface from the first layout information and the screen parameter is not particularly limited in the embodiments of the present disclosure.

In some embodiments, generating second layout information of the screen mirroring interface based on the first layout information and the screen parameter includes: determining, based on the first layout information, a constraint relationship between first attribute information of a first control in the display interface represented by the first layout information and the first control; determining, based on the first attribute information, the constraint relationship and the screen parameter, second attribute information of a second control corresponding to the first control in the screen mirroring interface, wherein the screen parameter include at least one of a size, a resolution or a pixel density of the screen mirroring window, and second controls meet the constraint relationship; and generating the second layout information based on the second attribute information and the constraint relationship.

In an embodiment of the present disclosure, the first layout information and the second layout information are both layout information, where the first layout information refers to layout information corresponding to the display interface, and the second layout information refers to layout information corresponding to the screen mirroring interface. The terms "first" and "second" are used only for distinguishing purposes and have no special meaning. The first layout information can represent a constraint relationship between first attribute information of a first control in the display interface and the first control; and the second layout information can represent a constraint relationship between second attribute information of a second control in the screen mirroring interface and the second control.

In an embodiment of the present disclosure, the first control and the second control are both controls, the first control refers to a control in the display interface, and the second control refers to a control in the screen mirroring interface. The second control in the screen mirroring interface is in one-to-one correspondence with the first control in the display interface. In other words, the second control is mapping of the first control in the screen mirroring interface. The first attribute information of the first control represents attributes of the first control, such as a size, a length-width ratio, a shape, a font size, a resolution and other attributes of the first control. The second attribute information of the second control represents attributes of the second control, such as a size, a length-width ratio, a shape, a font size, a resolution and other attributes of the second control. In an embodiment of the present disclosure, by determining the second attribute information from the first attribute information and the screen parameter, a projection of the first control in the screen mirroring interface (i.e., the second control) can be prevented from being distorted or deformed.

In an embodiment of the present disclosure, the constraint relationship between the controls represents a relationship between the controls, and is used for defining positions of the controls in the interface. In an embodiment of the present disclosure, by determining the second attribute information of the second control from the first attribute information of the first control and the screen parameter, the second control can adapt to the size, resolution, pixel density and the like of the screen mirroring window, so that the sharpness of the second control is ensured to avoid picture distortion, while disproportion of the second control is also prevented. The second controls in the screen mirroring interface meet the same constraint relationship as the first controls, so that disproportion of the screen mirroring interface relative to the display interface is avoided.

In an embodiment of the present disclosure, it is possible to adjust the screen parameter of the screen mirroring window by a user as needed after the screen mirroring.

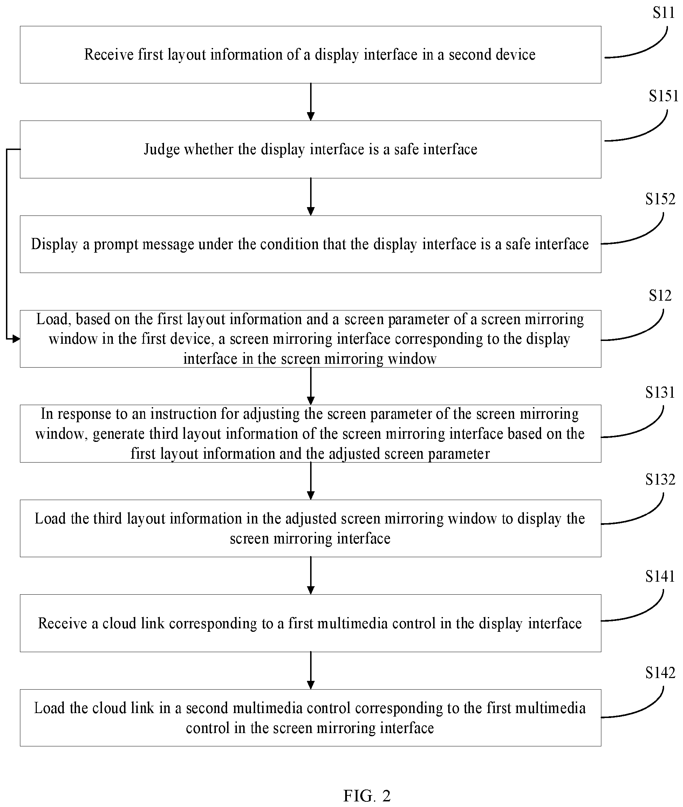

Accordingly, in some embodiments, referring to FIG. 2, the screen mirroring method further includes: S131 and S132.

At S131, in response to an instruction for adjusting the screen parameter of the screen mirroring window, generating third layout information of the screen mirroring interface based on the first layout information and the adjusted screen parameter. At S132, loading the third layout information in the adjusted screen mirroring window to display the screen mirroring interface.

How to adjust the screen parameter of the screen mirroring window is not particularly limited in the embodiments of the present disclosure. For example, after the screen mirroring, at least one of the size, resolution or pixel density of the screen mirroring window may be adjusted based on the existing screen mirroring window.

It should be noted that the third layout information generated by the first device after the user adjusts the screen parameter of the screen mirroring window is the layout information of the adjusted screen mirroring window, including a size of the adjusted screen mirroring interface adapted to a size of the adjusted screen mirroring window, and a resolution of the adjusted screen mirroring interface adapted to a resolution of the adjusted screen mirroring window, so as to support adjustment of the screen parameter of the screen mirroring window by the user while ensuring that the picture of the screen mirroring interface is not distorted or disproportioned.

In an embodiment of the present disclosure, the first device supports the user to adjust at least one of screen parameters such as the size, resolution or pixel density of the screen mirroring window.

In some embodiments, referring to FIG. 2, the screen mirroring method further includes the following operations S141 to S142. At S141, receiving a cloud link corresponding to a first multimedia control in the display interface. At S142, loading the cloud link in a second multimedia control corresponding to the first multimedia control in the screen mirroring interface.

The cloud link is not particularly limited in the embodiments of the present disclosure. For example, the cloud link includes any one of an audio link, a video link, or a web page link.

In an embodiment of the present disclosure, when an audio, video, or other multimedia content in the second device is obtained from the cloud and played online, the second device acquires and transmits a cloud link to the first device, where the first device parses the cloud link and plays the corresponding audio, video, or other multimedia content. For a web page to be loaded, the second device also transmits a cloud link of the web page to the first device, and the first device loads the web page by parsing the cloud link.

In an embodiment of the present disclosure, when an audio, video, web page, or other multimedia content is to be played or loaded, the source end transmits the cloud link to the sink end, which can further reduce the data stream transmitted during screen mirroring, save network bandwidth and improve the smoothness of screen mirroring, while by directly acquiring the multimedia content from the cloud, the quality of audio, video, and the like is further ensured and the user experience is improved.

It should be noted that, in an embodiment of the present disclosure, if the audio, video, and other multimedia content is a local file of the second device, the local file is transmitted to the first device for playing in a streaming transmission manner.

How to judge whether the control in the second device is a control for transmitting a cloud link is not particularly limited in the embodiments of the present disclosure. For example, statistics of the commonly used applications are conducted, and the commonly used package names and control IDs are recorded; and matching is made based the control IDs and package names.

In some embodiments, for a layout involving resource loading, the second device transmits the loaded resources to the first device along with the first layout information. When the first device parses the first layout information, the first layout information cannot be obtained if a safe interface is involved, and then the first device reminds a user of performing a corresponding operation in the second device by displaying a prompt message.

Accordingly, in some embodiments, referring to FIG. 2, before loading, based on the first layout information and a screen parameter of the screen mirroring window in the first device, the screen mirroring interface corresponding to the display interface in the screen mirroring window, the screen mirroring method further includes the following operations S151 to S152. At S151, judging whether the display interface is a safe interface. At S152, displaying a prompt message under the condition that the display interface is a safe interface.

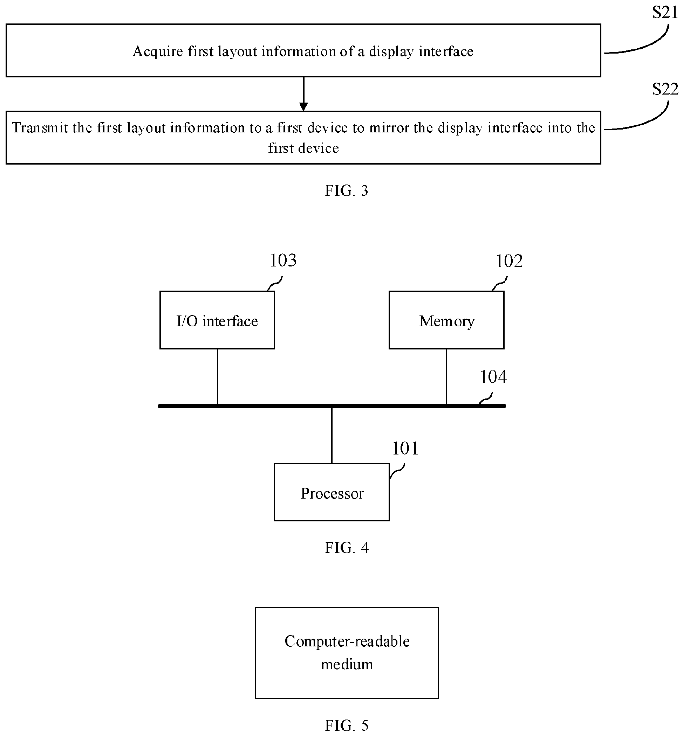

In a second aspect, referring to FIG. 3, an embodiment of the present disclosure provides a screen mirroring method applied to a second device, including the following operations S21 to S22. At S21, acquiring first layout information of a display interface. At S22, transmitting the first layout information to a first device to mirror the display interface into the first device.

According to the screen mirroring method provided in the embodiment of the present disclosure, when the display interface is mirrored from the second device to the first device, only layout information of the display interface is delivered to the first device, so that based on the first layout information and a screen parameter of the screen mirroring window in the first device, the first device can generate a screen mirroring interface adapted to the screen mirroring window in the first device. Therefore, a smaller data volume needs to be transmitted in the screen mirroring process, and the screen mirroring smoothness is improved, while the sharpness of the screen mirroring interface generated in the first device is also guaranteed, thereby avoiding disproportion and picture distortion. Further, the requirements on the performance of the electronic device can be reduced, the network bandwidth can be saved, and the use experience of a user can be improved.

In some embodiments, the first layout information represents a constraint relationship between first attribute information of a first control in the display interface and the first control.

In some embodiments, the screen mirroring method further includes: acquiring a cloud link corresponding to a first multimedia control in the display interface; and sending the cloud link to the first device.

The cloud link is not particularly limited in the embodiments of the present disclosure. For example, the cloud link includes any one of an audio link, a video link, or a web page link.

In a third aspect, referring to FIG. 4, an embodiment of the present disclosure provides an electronic device, including: one or more processors 101; and a memory 102 having one or more programs stored thereon which, when executed by the one or more processors, cause the one or more processors to implement the screen mirroring method of the first aspect and/or the screen mirroring method of the second aspect of the embodiments of the present disclosure.

The electronic device further includes one or more I/O interfaces 103 connected between the processor and the memory, and configured to enable information interaction between the processor and the memory.

The processor 101 is a device with a data processing capability, including but not limited to a central processing unit (CPU), or the like; The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a data bus or the like.

In some embodiments, the processor 101, the memory 102, and the I/O interface 103 are interconnected via a bus 104, and further connected to other components of a computing device.

In a fourth aspect, referring to FIG. 5, an embodiment of the present disclosure provides a computer-readable medium storing a computer program thereon which, when executed by a processor, causes the screen mirroring method of the first aspect and/or the screen mirroring method of the second aspect of the embodiments of the present disclosure to be implemented.

To improve understanding of the technical solutions provided in the embodiments of the present disclosure for those skilled in the art, the technical solutions provided in the embodiments of the present disclosure will be further described in detail below with reference to an exemplary embodiment.

### Exemplary Embodiment

In this embodiment, in the process of screen mirroring from the source end to the sink end, the screen mirroring signaling transmitted by the source end is layout information, and the sink end displays a screen mirroring interface by loading the layout information.

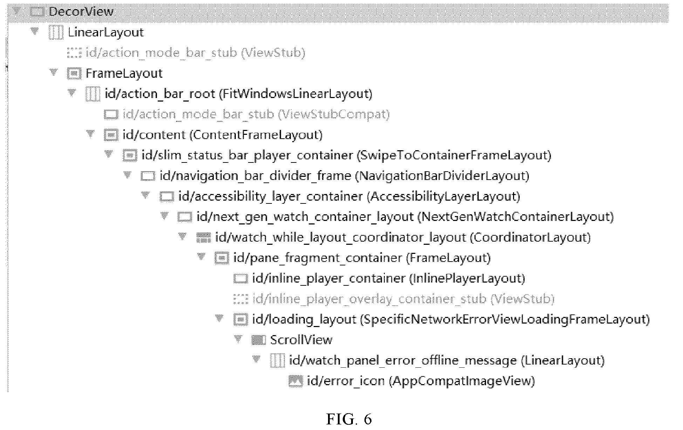

Taking the case of mirroring a setting menu interface of the source end to the sink end as an example, the layout information in the form of a view tree is shown in FIG. 6, where the layout information mainly includes current packet name information, information in the current view tree, and drawable, text, layout_width and other information from DecorView to each control.

The source end acquires structural information of the view tree of the setting menu interface, and encodes and transmits the structural information to the sink end. The encoded information includes a layout ID, layout_width, and other information of an outermost layer of the display interface, and a constraint relationship between attributes of inner layer controls and controls, and the like. The sink end decodes and obtains the structural information of the view tree of the display interface, generates a new layout file to adapt to a screen parameter of a screen mirroring window of the sink end, and loads the layout file into the screen mirroring window so that the screen mirroring interface can be displayed.

Those of ordinary skill in the art will appreciate that all or some operations of the above-described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and nonremovable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

According to the screen mirroring method provided in the embodiment of the present disclosure, when the display interface is mirrored from the second device to the first device, only layout information of the display interface is delivered to the first device, and based on the first layout information and a screen parameter of the screen mirroring window in the first device, the first device can generate a screen mirroring interface adapted to the screen mirroring window in the first device. Therefore, a smaller data volume needs to be transmitted in the screen mirroring process, and the screen mirroring smoothness is improved, while the sharpness of the screen mirroring interface generated in the first device is also guaranteed, thereby avoiding disproportion and picture distortion. Further, the requirements on the performance of the electronic device can be reduced, the network bandwidth can be saved, and the use experience of a user can be improved.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A screen mirroring method applied to a first device, comprising:
receiving first layout information of a display interface in a second device; and
loading, based on the first layout information and a screen parameter of a screen mirroring window in the first device, a screen mirroring interface corresponding to the display interface in the screen mirroring window.

2. The screen mirroring method according to claim 1, wherein loading, based on the first layout information and the screen parameter of the screen mirroring window in the first device, the screen mirroring interface corresponding to the display interface in the screen mirroring window comprises:
generating second layout information of the screen mirroring interface based on the first layout information and the screen parameter; and
loading the second layout information in the screen mirroring window to display the screen mirroring interface.

3. The screen mirroring method according to claim 2, wherein generating the second layout information of the screen mirroring interface based on the first layout information and the screen parameter comprises:
determining, based on the first layout information, a constraint relationship between first attribute information of a first control in the display interface represented by the first layout information and the first control;
determining, based on the first attribute information, the constraint relationship and the screen parameter, second attribute information of a second control corresponding to the first control in the screen mirroring interface, wherein the screen parameter comprise at least one of a size, a resolution or a pixel density of the screen mirroring window, and second controls meet the constraint relationship; and
generating the second layout information based on the second attribute information and the constraint relationship.

4. The screen mirroring method according to any one of claims 2 or 3, wherein the screen mirroring method further comprises:
in response to an instruction for adjusting the screen parameter of the screen mirroring window, generating third layout information of the screen mirroring interface based on the first layout information and the adjusted screen parameter; and
loading the third layout information in the screen mirroring window after adjustment to display the screen mirroring interface.

5. The screen mirroring method according to any one of claims 1 to 3, wherein the screen mirroring method further comprises:
receiving a cloud link corresponding to a first multimedia control in the display interface; and
loading the cloud link in a second multimedia control corresponding to the first multimedia control in the screen mirroring interface.

6. The screen mirroring method according to any one of claims 1 to 3, wherein before loading, based on the first layout information and the screen parameter of the screen mirroring window in the first device, the screen mirroring interface corresponding to the display interface in the screen mirroring window, the screen mirroring method further comprises:
judging whether the display interface is a safe interface; and
displaying a prompt message under a condition that the display interface is a safe interface.

7. A screen mirroring method applied to a second device, comprising:
acquiring first layout information of a display interface; and
transmitting the first layout information to a first device to mirror the display interface into the first device.

8. The screen mirroring method according to claim 7, wherein the first layout information represents a constraint relationship between first attribute information of a first control in the display interface and the first control.

9. The screen mirroring method according to claim 7 or 8, wherein the screen mirroring method further comprises:
acquiring a cloud link corresponding to a first multimedia control in the display interface; and
sending the cloud link to the first device.

10. An electronic device, comprising:
one or more processors; and
a memory having one or more programs stored thereon which, when executed by the one or more processors, cause the one or more processors to implement the screen mirroring method according to any one of claims 1 to 9.

11. A computer-readable medium storing a computer program thereon which, when executed by a processor, causes the screen mirroring method according to any one of claims 1 to 9 to be implemented.
